Europäisches Patentamt

European Patent Office

Office européen des brevets

(19)

(11) Numéro de publication : **0 109 507 B1**

(12) **FASCICULE DE BREVET EUROPÉEN**

(45) Date de publication du fascicule du brevet :
03.12.86

(51) Int. Cl.⁴ : **A 61 C   1/08, A 61 C   1/05**

(21) Numéro de dépôt : **83109400.8**

(22) Date de dépôt : **21.09.83**

(54) **Instrument dentaire à main à plusieurs sprays.**

(30) Priorité : **26.10.82 CH 6233/82**

(43) Date de publication de la demande :
**30.05.84 Bulletin 84/22**

(45) Mention de la délivrance du brevet :
**03.12.86 Bulletin 86/49**

(84) Etats contractants désignés :
**AT DE FR GB IT NL SE**

(56) Documents cités :
**WO-A-82 /013 09**
**AT-B-   280 466**
**DE-B- 1 098 162**
**DE-B- 2 627 743**
**DE-U- 1 875 642**
**US-A- 3 256 604**
**US-A- 3 525 154**
**US-A- 4 341 518**

(73) Titulaire : **MOSIMANN, David**
**13-15, chemin des Grillons**
**CH-2502 Bienne (CH)**

(72) Inventeur : **MOSIMANN, David**
**13-15, chemin des Grillons**
**CH-2502 Bienne (CH)**

(74) Mandataire : **Finck, Dieter et al**
**Patentanwälte v. Füner, Ebbinghaus, Finck Mariahilf-**
**platz 2 & 3**
**D-8000 München 90 (DE)**

Jouve, 18, rue St-Denis, 75001 Paris, France

## Description

La présente invention vise la réalisation d'un instrument dentaire à main, par exemple d'un contre-angle, pourvu de plusieurs sprays. Par cette expression, il faut entendre un instrument dentaire dont le nez diffuse, par plusieurs orifices, d'une part de l'air et d'autre part de l'eau qui ne forment un mélange destiné à être projeté dans la direction de l'outil, c'est-à-dire la fraise ou la pointe diamantée, qu'à la sortie desdits orifices et à l'extérieur de l'équipement.

Il existe actuellement sur le marché des instruments dentaires à main, en particulier des turbines dentaires, dont le nez comporte plusieurs sorties pour un prétendu spray. Ces turbines sont en définitive des turbines à plusieurs jets et on les qualifie faussement de turbines à plusieurs sprays. En effet, dans ces turbines, le mélange de l'air et de l'eau s'effectue dans l'équipement et il est conduit dans une chambre dans le nez de la turbine d'où il sort par plusieurs trous directionnels. L'expérience montre que ce mélange n'est jamais parfaitement dosé. Cela résulte essentiellement du long chemin — de l'équipement jusqu'à la sortie dans le nez de la turbine — qu'il doit parcourir pour atteindre sa destination. Il n'est agréable ni pour le praticien, ni pour le patient, d'avoir affaire à un mélange d'air et d'eau imparfait et inconstant, surtout dans le cas où l'eau est en abondance. En outre on a vu ci-dessus que le mélange d'air et d'eau réalisé dans l'équipement est conduit jusque dans une chambre dans le nez de la turbine. La base de cette chambre est constituée d'une plaquette appelée « diffuseur de spray », laquelle comporte plusieurs trous, deux ou trois en général, par lesquels le mélange est destiné à sortir. Ces trous sont directionnels, c'est-à-dire percés dans un angle déterminé de telle sorte qu'ils soient dirigés et qu'ils dirigent le mélange vers l'outil, soit la fraise ou la pointe diamantée. Lorsque la marche de la turbine est momentanément interrompue, l'eau du mélange stagne dans la chambre prédécrite dans le nez de la turbine si l'on prend pas la peine de la vider complètement. A la longue, du calcaire se forme contre les parois de cette chambre qui vient obstruer les trous directionnels du diffuseur de spray. Pour déboucher ces trous, on utilise généralement des sondes. En agissant de la sorte et en raison de la dureté de la matière obstruante, on déforme très souvent l'angle des trous en question qui ne sont dès lors plus directionnels. Il faut en outre préciser qu'il n'est pas aisé de déboucher ainsi les trous directionnels du diffuseur de spray eu égard à la petitesse de leurs dimensions.

Cette caractéristique accroît encore les difficultés de leur débouchement et augmente le risque de les rendre inopérants par déformation de leur angle.

D'autre part, il existe des pièces à main présentant un coude au voisinage du nez, connues sous le nom de contre-angles dentaires. Les réalisations actuellement connues comportent un seul spray ou, plus précisément, une seule sortie pour le spray au niveau du nez de l'instrument. Cette sortie est double lorsque l'adduction de l'air et de l'eau est réalisée par des conduits distincts, incorporés ou non à l'instrument. Au niveau du nez de celui-ci, ces conduits convergent pour permettre à l'air et à l'eau de se mélanger. Ladite sortie est simple lorsque l'adduction de l'air et de l'eau est réalisée par un conduit unique incorporé ou non à l'instrument. Un exemple de contre-angle pourvu d'un conduit incorporé est décrit dans le brevet US 4 341 518. Dans ce cas, le conduit, situé au voisinage du nez, dirige un mélange d'air et d'eau dont le dosage est réalisé au amont de l'entrée du moyen d'alimentation. La réalisation de ce dosage présente les mêmes difficultés que celles déjà invoquées ci-dessus s'agissant de la turbine dentaire. Dans les contre-angles, la source d'approvisionnement en air ne peut être que spéciale dans ce sens que l'air qu'elle produit ne sert pas de moyen propulseur du rotor. Cette source est évidemment située en amont du moyen d'alimentation. Elle peut être incorporée à l'équipement et, généralement, un dispositif d'électrovannes règle l'afflux d'air qu'elle diffuse.

WO-A-82/01309 décrit, par ailleurs, une turbine dentaire comportant une douille de protection. Le rotor de la turbine dentaire à air est constitué d'un axe monté sur des roulements à billes ou sur un ou plusieurs paliers ou paliers à air. L'axe comporte un logement dans lequel est situé le mécanisme de fixation de la fraise ou de la pointe diamantée. Le nez de la turbine comprend un alésage nécessaire au passage de l'axe. Dans la tête de la turbine, le rotor est monté sur des anneaux en matière souple ou des O rings qui en assurent la suspension radiale notamment. Cela signifie que le rotor est susceptible de subir des déplacements radiaux à l'intérieur de la tête de la turbine suivant la pression exercée sur l'axe porte-outil. Il est dès lors nécessaire que l'alésage du nez de la turbine soit suffisamment plus grand que le diamètre de l'axe afin d'éviter que celui-ci, lorsqu'il tourne, vienne buter et frotter contre la paroi de l'alésage du nez de la turbine. Par l'espace existant entre l'axe et l'alésage du nez de la turbine, de la dentine, de la poussière d'émail, du sang, des résidus de plombage et d'autres déchets peuvent s'infiltrer lorsque la turbine est en action. Ces déchets sont propulsés jusqu'à la hauteur du roulement à billes inférieur ou du ou des paliers à air qu'ils viennent encrasser. Il en résulte un défaut de fiabilité des turbines dentaires ainsi conçues de même que des foyers d'infection non négligeables à l'intérieur même de l'instrument. La douille que comporte la turbine selon cette invention empêche les déchets de toutes sortes d'atteindre les organes vitaux du rotor, soit le roulement à billes inférieur ou le palier à air. C'est la raison pour laquelle elle est dite « de protection ».

Enfin, une pièce à main dentaire comportant une douille de protection ainsi que des conduits pour l'air et pour l'eau débouchant dans le nez de la pièce, est décrite dans le brevet AT 280466. A cet effet, la douille comporte deux saignées, ou canaux, une saignée étant alimentée en air et l'autre en eau. Chaque saignée est reliée à l'extérieur de la pièce par un conduit débouchant à la partie inférieure du nez. Les deux conduits sont situés au voisinage l'un de l'autre et orientés de manière que les jets d'air et d'eau se rencontrent en dehors du nez pour se mélanger. Le mélange ainsi obtenu n'est cependant pas très homogène et ne peut être comparé à celui fourni par un spray.

Le but de l'invention est de pallier aux inconvénients des réalisations connues en fournissant un instrument dentaire à main fiable, protégé intérieurement contre les projections de matières solides ou liquides et ayant plusieurs véritables sprays.

Pour atteindre cet objectif, l'instrument dentaire selon l'invention, dont la tête renferme un rotor monté sur un ou plusieurs moyens à roulement ou sur un ou plusieurs paliers ou paliers à air, l'instrument comportant une douille de protection ajustée sur la bague extérieure du moyen à roulement unique ou du moyen à roulement inférieur ou encore sur la paroi extérieure du ou des paliers ou paliers à air, ladite douille se prolongeant sous le moyen à roulement respectivement sous le ou les paliers, autour de l'axe du rotor, dans l'alésage du nez de l'instrument où elle forme un élément constituant une masse, est particulièrement remarquable en ce que le pourtour externe de la douille de protection est pourvu de deux saignées horizontales, superposées et indépendantes l'une de l'autre, qui forment autant de chambres avec la paroi de l'alésage du nez de l'instrument, la chambre supérieure étant alimentée en air par une amenée prévue à cet effet, la chambre inférieure étant alimentée en eau par une autre amenée prévue à cet effet, en ce qu'au moins deux conduits indépendants sont pratiqués dans la masse même de la douille de protection qui, d'une part, sont raccordés à la chambre à eau et qui, d'autre part, débouchent sous le nez de l'instrument et à l'intérieur desquels un tube d'un diamètre sensiblement inférieur est insinué qui, quant à lui, est raccordé à la chambre à air et en ce que les sorties des tubes affleurent sensiblement avec celles des conduits correspondants.

De préférence, la chambre à air et la chambre à eau sont rendues étanches par un jeu de joints comprimés entre le pourtour externe de la douille de protection et la paroi de l'alésage du nez de l'instrument, les conduits et les tubes sont directionnels, et le débit d'eau alimentant la chambre à eau peut être réglé. Enfin, dans une forme d'exécution particulière, l'air servant de moyen propulseur du rotor alimente également la chambre à air.

Les dessins annexés représentent, à titre d'exemple, une forme d'exécution possible de l'invention.

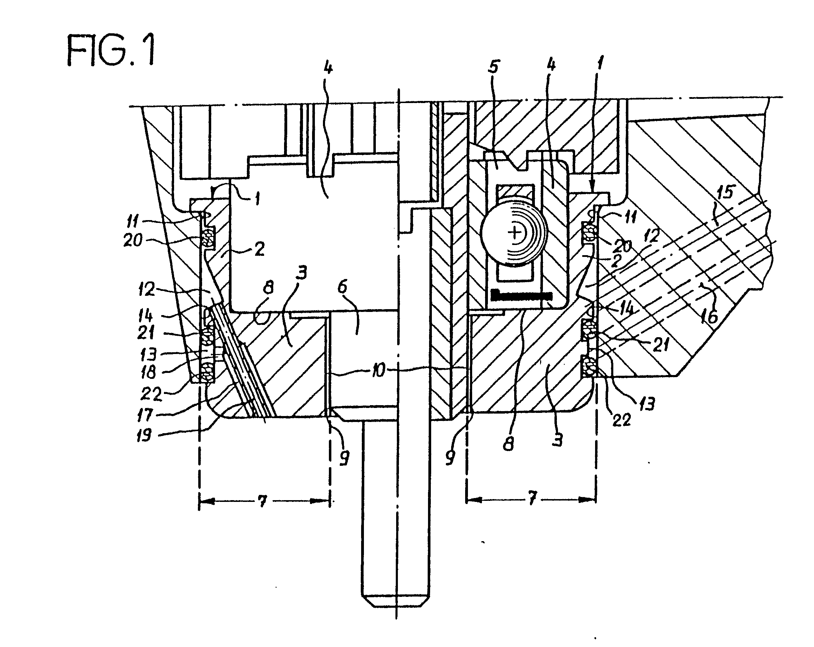

La figure 1 est une vue en coupe transversale du nez de l'instrument, en l'occurrence une turbine.

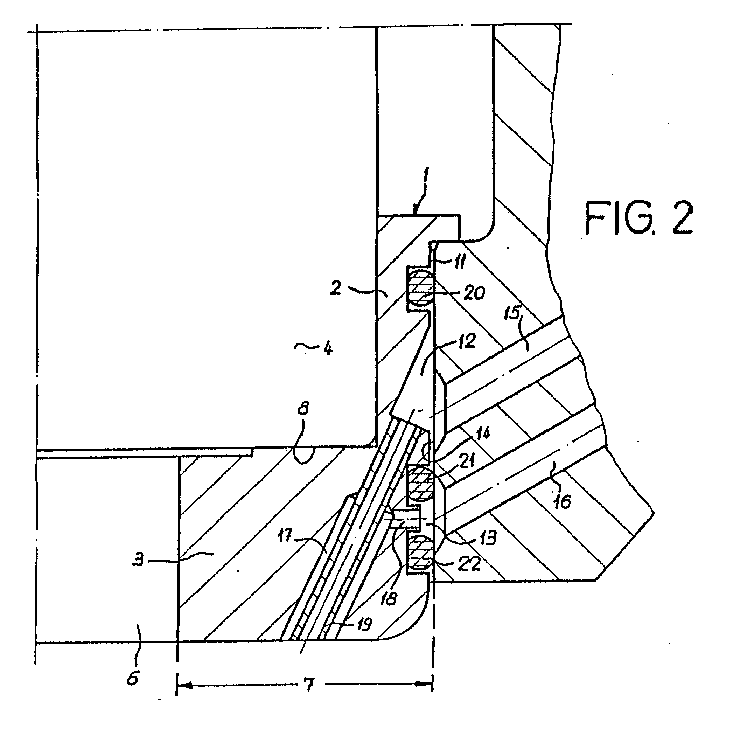

La figure 2 est un agrandissement d'une portion de la fig. 1.

La figure 3 est une vue de plan de dessous du nez de la turbine.

La douille de protection 1 qui est d'une seule pièce se compose d'une partie supérieure 2 et d'une partie inférieure 3. La paroi inférieure de sa partie supérieure 2 est ajustée sur la bague extérieure 4 du roulement à billes 5. Elle se prolonge, par sa partie inférieure 3, sous le roulement à billes 5, autour de l'axe 6 du rotor, dans l'alésage 7 du nez de la turbine où elle forme une masse. Elle enveloppe donc l'ensemble constitué par au moins une partie de la bague extérieure 4 du roulement à billes 5, la face inférieure 8 de ce dernier et l'axe 6 du rotor. Elle est solidaire de la bague extérieure 4 du roulement à billes 5 et, de ce fait, de l'ensemble du rotor dont elle suit les éventuels déplacements radiaux. Il est évident qu'un espace 9 doit être ménagé entre l'axe 6 du rotor et la paroi interne 10 de la partie inférieure 3 de la douille de protection 1 pour éviter tout frottement entre ces éléments lorsque l'axe 6 du rotor tourne. Cependant, la douille de protection 1 étant solidaire du rotor, cet espace 9 peut être infiniment petit et mal se prêter au passage de déchets qui, pour le surplus, ont tendance à être éliminés par le mouvement rotatif de l'axe 6 du rotor s'ils ont effectivement pénétré dans l'espace 9.

Le pourtour externe 11 de la douille de protection 1 est pourvu de deux saignées 12, 13 horizontales, superposées et indépendantes l'une de l'autre. Ces saignées 12, 13 forment deux chambres avec la paroi 14 de l'alésage 7 du nez de la turbine.

La chambre supérieure 12 est alimentée en air par une amenée 15 prévue à cet effet tandis que la chambre inférieure 13 est alimentée en eau par une autre amenée 16 également prévue à cet effet. En l'occurrence, les amenées 15, 16 sont noyées dans le corps de l'instrument.

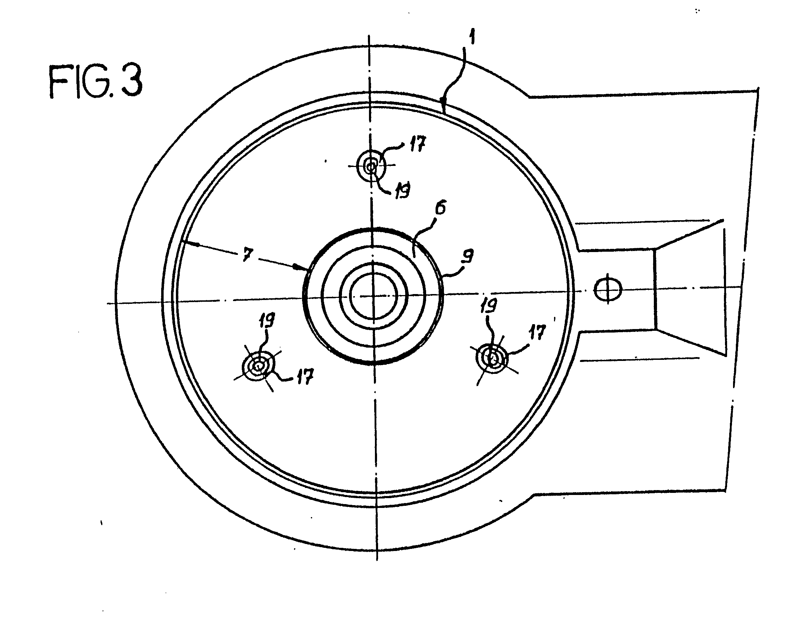

Des conduits 17, au nombre de trois équidistants selon la fig. 3 sont percés dans la masse de la douille de protection 1. Ces conduits sont, d'une part, raccordés à la chambre à eau 13 par le pont 18 et, d'autre part, débouchent sous le nez de la turbine. A l'intérieur de chacun de ces conduits 17, un tube 19 d'un diamètre sensiblement inférieur est insinué. Les tubes 19 sont, quant à eux, raccordés à la chambre à air 12.

Pour des raisons évidentes, un jeu de O rings 20, 21, 22 placés respectivement dans des logements prévus à cet effet au-dessus de la chambre à air 12, entre la chambre à air 12 et la chambre à eau 13 et au-dessous de la chambre à eau 13, sont comprimés entre le pourtour externe 11 de la douille de protection 1 et la paroi 14 de l'alésage 7 du nez de la turbine. D'une part, ce jeu de O rings 20, 21, 22 assure l'étanchéité de la chambre à air 12 et de la chambre à eau 13 et, d'autre part, il assure la suspension du rotor dans l'alésage 7 du nez de la turbine puisque la douille de protection 1 est solidaire de la bague extérieure 4 du roulement à billes 5, et, de ce fait, de l'ensemble du rotor. Le jeu de O rings 20, 21, 22 amortit donc les éventuels déplacements radiaux du rotor dus à la pression exercée sur l'axe porte-outil.

Le ou les sprays d'une turbine dentaire ont généralement deux fonctions : d'une part, ils ont un effet refroidissant et, d'autre part, un effet nettoyant sur l'outil, soit la fraise ou la pointe diamantée, et sur la dent à travailler. Pour remplir ces fonctions, les sprays doivent être directionnels, c'est-à-dire dirigés vers l'outil, soit la fraise ou la pointe diamantée. Les conduits 17, et, par conséquent, les tubes 19 répondent donc à cette caractéristique.

Lorsque la turbine dentaire entre en fonctionnement, l'eau est dirigée par l'amenée 16 dans la chambre à eau 13 puis, par le pont 18 dans le conduit 17. Simultanément l'air est dirigé par l'amenée 15 dans la chambre à air 12 puis dans le tube 19. A la sortie du conduit 17 une certaine quantité d'eau se forme que l'air sorti du tube 19 chasse et pulvérise dans la direction de l'outil, soit la fraise ou la pointe diamantée, sous la forme d'un brouillard. Pour cela, il est préférable que les sorties des tubes 19 affleurent sensiblement avec celles des conduits 17 correspondants.

L'air alimentant la chambre à air 12 provient de l'air de l'alimentation de la turbine. Son débit est constant et précis car il est donné par le débit d'air commandant la rotation du rotor. Le débit d'eau alimentant la chambre à eau peut être réglé sur l'équipement.

L'invention peut également être appliquée en particulier à un contre-angle. Dans ce cas, elle ne diffère de la forme d'exécution prédécrite qu'en ce que l'air alimentant la chambre à air 12 provient d'une source spéciale située en amont du moyen d'alimentation, incorporée ou non à l'équipement. L'afflux d'air distillé par cette source est réglé par un dispositif d'électrovannes de façon à former avec l'eau un mélange idéal.

Les avantages de l'instrument dentaire à main à plusieurs sprays selon l'invention sont nombreux. Le mélange d'air et d'eau au sortir des conduits 17 et des tubes 19 que l'on peut, idéalement, estimer à 60 à 70 % d'air pour 30 à 40 % d'eau est garanti, ce qui implique une excellente efficacité de l'instrument. Réalisés en acier inoxydable, la douille de protection 1 et, conséquemment, les conduits 17 ainsi que les tubes 19 sont moins exposés à la corrosion, donc à l'obstruction. L'ensemble du dispositif formé par la douille de protection 1, les conduits 17 et les tubes 19 est facilement interchangeable.

**Revendications**

1. Instrument dentaire à main à plusieurs sprays, dont la tête renferme un rotor monté sur un ou plusieurs moyens à roulement ou sur un ou plusieurs paliers ou paliers à air, l'instrument comportant une douille de protection (1) ajustée sur la bague extérieure (4) du moyen à roulement unique ou du moyen à roulement inférieur (5) ou encore sur la paroi extérieure du ou des paliers ou paliers à air, ladite douille se prolongeant sous le moyen à roulement (5) respectivement sous le ou les paliers, autour de l'axe (6) du rotor, dans l'alésage (7) du nez de l'instrument où elle forme un élément constituant une masse, caractérisé en ce que le pourtour externe (11) de la douille de protection (1) est pourvu de deux saignées (12, 13) horizontales, superposées et indépendantes l'une de l'autre, qui forment autant de chambres avec la paroi (14) de l'alésage (7) du nez de l'instrument, la chambre supérieure (12) étant alimentée en air par une amenée (15) prévue à cet effet, la chambre inférieure (13) étant alimentée en eau par une autre amenée (16) prévue à cet effet, en ce qu'au moins deux conduits (17) indépendants sont pratiqués dans la masse même de la douille de protection (1) qui, d'une part, sont raccordés à la chambre à eau (13) et qui, d'autre part, débouchent sous le nez de l'instrument et à l'intérieur desquels un tube (19) d'un diamètre sensiblement inférieur est insinué qui, quant à lui, est raccordé à la chambre à air (12) et en ce que les sorties des tubes (19) affleurent sensiblement avec celles des conduits (17) correspondants.

2. Instrument dentaire à main à plusieurs sprays selon la revendication 1, caractérisé en ce que la chambre à air (12) et la chambre à eau (13) sont rendues étanches par un jeu de joints (20, 21, 22) comprimés entre le pourtour externe (11) de la douille de protection (1) et la paroi (14) de l'alésage (7) du nez de l'instrument.

3. Instrument dentaire à main à plusieurs sprays selon les revendications 1 et 2, caractérisé en ce que les conduits (17) et les tubes (19) sont directionnels.

4. Instrument dentaire à main à plusieurs sprays selon les revendications 1, 2 et 3, caractérisé en ce que le débit d'eau alimentant la chambre à eau (13) peut être réglé.

5. Instrument dentaire à main à plusieurs sprays selon les revendications 1, 2, 3 et 4, caractérisé en ce que l'air servant de moyen propulseur du rotor alimente également la chambre à air (12).

**Claims**

1. Hand-operated dental instrument comprising a plurality of sprays, the head of which encloses a rotor mounted on one or a plurality of bearing means or on one or a plurality of air cushions, the instrument comprising a protective casing (1) fitted on the outer ring (4) of the single bearing means or of the lower bearing means (5) or again on the outer wall of the air cushion or cushions, the said casing extending under the bearing means (5) or respectively under the cushion or cushions, about the axis (6) of the rotor, in the bore (7) of the nose of the instrument where it forms an element constituting a mass, characterized in that the outer periphery (11) of the protective casing (1) is provided with two horizontal grooves (12, 13) superposed and independent of each other, which form as many chambers with the wall (14) of the bore (7) in the nose of the instrument, the upper chamber (12) being supplied with air through a passage (15) provided for the purpose, the lower chamber (13) being supplied with water through another passage (16) provided for the purpose, in that at least two independent ducts (17) are provided in the actual mass of the protective casing (1) which, on the one hand, are connected to the water chamber (13) and which, on the other, discharge below the nose of the instrument and inside which there is inserted a tube (19) of substantially smaller diameter which, where it is concerned, is connected to the air chamber (12), the outlets of the tubes (19) being substantially flush with those of the corresponding ducts (17).

2. Hand-operated dental instrument comprising a plurality of sprays according to Claim 1, characterized in that the air chamber (12) and the water chamber (13) are made fluidtight by a set of gaskets (20, 21, 22) compressed between the outer periphery (11) of the protective casing (1) and the wall (14) of the bore (7) of the nose of the instrument.

3. Hand-operated dental instrument comprising a plurality of sprays according to Claims 1 and 2, characterized in that the ducts (17) and the tubes (19) are directional.

4. Hand-operated dental instrument comprising a plurality of sprays according to Claims 1, 2 and 3, characterized in that the rate of flow of water fed to the water chamber (13) can be regulated.

5. Hand-operated dental instrument comprising a plurality of sprays according to Claims 1, 2, 3 and 4, characterized in that the air serving as a propulsion means for the rotor likewise supplies the air chamber (12).

**Patentansprüche**

1. Handbetätigtes Dentalinstrument mit einer Vielzahl von Zerstäubern, dessen Kopf einen Rotor einschließt, der auf einem oder mehreren Wälzlagereinrichtungen oder auf einem oder mehreren Lagern oder Luftlagern angeordnet ist, wobei das Instrument ein Schutzgehäuse (1) aufweist, das auf den Außenring (4) der einzigen Lagereinrichtung oder auf die untere Lagereinrichtung (5) oder auch auf die Außenwand eines oder der Lager oder Luftlager aufgebracht ist, wobei das Gehäuse sich unter der Lagereinrichtung (5) bzw. unter dem oder den Luftlagern um die Achse (6) des Rotors in die Bohrung (7) der Instrumentennase erstreckt, wo es ein eine Masse bildendes Element darstellt, dadurch gekennzeichnet, daß der Außenumfang (11) des Schutzgehäuses (1) mit zwei horizontalen Nuten (12, 13) versehen ist, die übereinander angeordnet und unabhängig voneinander sind und die entsprechend viele Kammern mit der Wand (14) der Bohrung (7) in der Instrumentennase bilden, wobei die obere Kammer (12) mit Luft durch einen für diesen Zweck vorgesehenen Kanal (15) und die untere Kammer (13) mit Wasser über einen weiteren, für diesen Zweck vorgesehenen Kanal (16) versorgt werden, daß wenigstens zwei unabhängige Leitungen (17) in der Masse des Schutzgehäuses (1) selbst vorgesehen sind, die einerseits mit der Wasserkammer (13) verbunden sind und andererseits unter der Instrumentennase münden und innerhalb derer ein Rohr (19) mit einem wesentlich kleineren Durchmesser eingeführt ist, das seinerseits mit der Luftkammer (12) verbunden ist, wobei die Auslässe der Rohre (19) im wesentlichen zu denen der entsprechenden Leitungen (17) fluchtend ausgerichtet sind.

2. Handbetätigtes Dentalinstrument mit einer Vielzahl von Zerstäubern nach Anspruch 1, dadurch gekennzeichnet, daß die Luftkammer (12) und die Wasserkammer (13) durch einen Satz von Dichtungen (20, 21, 22) fluiddicht ausgeführt sind, die zwischen dem Außenumfang (11) des Schutzgehäuses (1) und der Wand (14) der Bohrung (7) der Instrumentennase zusammengedrückt sind.

3. Handbetätigtes Dentalinstrument mit einer Vielzahl von Zerstäubern nach den Ansprüchen 1 und 2, dadurch gekennzeichnet, daß die Leitungen (17) und die Rohre (19) gerichtet sind.

4. Handbetätigtes Dentalinstrument mit einer Vielzahl von Zerstäubern nach den Ansprüchen 1, 2 und 3, dadurch gekennzeichnet, daß der der Wasserkammer (13) zugeführte Wassermengenstrom reguliert werden kann.

5. Handbetätigtes Dentalinstrument mit einer Vielzahl von Zerstäubern nach den Ansprüchen 1, 2, 3 und 4, dadurch gekennzeichnet, daß die Luft, die als Antriebsmittel für den Rotor dient, auch die Luftkammer (12) versorgt.

FIG.1

FIG. 2

2

FIG.3

0 109 507